(19) Europäisches Patentamt European Patent Office Office européen des brevets

(11) **EP 4 228 844 B1**

(12) **EUROPÄISCHE PATENTSCHRIFT**

(45) Veröffentlichungstag und Bekanntmachung des Hinweises auf die Patenterteilung:
**31.12.2025   Patentblatt 2026/01**

(21) Anmeldenummer: **21797974.9**

(22) Anmeldetag: **15.10.2021**

(51) Internationale Patentklassifikation (IPC):
**B23F 21/00** *(2006.01)*     **B23F 21/02** *(2006.01)*
**B23F 1/02** *(2006.01)*      **B23F 5/04** *(2006.01)*
**B23F 19/00** *(2006.01)*

(52) Gemeinsame Patentklassifikation (CPC):
**B23F 21/005; B23F 1/023; B23F 5/04; B23F 21/026;** B23F 19/00

(86) Internationale Anmeldenummer:
**PCT/EP2021/078690**

(87) Internationale Veröffentlichungsnummer:
**WO 2022/084199 (28.04.2022 Gazette 2022/17)**

(54) **VERFAHREN DER BEARBEITUNG EINER VERZAHNUNG, VERZAHNUNGSWERKZEUG UND VERZAHNUNGSMASCHINE**

METHOD FOR CUTTING A GEAR, GEAR-CUTTING TOOL AND GEAR-CUTTING MACHINE

PROCÉDÉ D'USINAGE D'UNE DENTURE, OUTIL À TAILLER LES ENGRENAGES ET MACHINE À TAILLER LES ENGRENAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2020   DE 102020006418**

(43) Veröffentlichungstag der Anmeldung:
**23.08.2023   Patentblatt 2023/34**

(73) Patentinhaber: **Gleason Cutting Tools GmbH 80809 München (DE)**

(72) Erfinder:
• **BLEIL, Nicolas 80809 München (DE)**
• **GOLLWITZER, Markus 80809 München (DE)**

(74) Vertreter: **Leinweber & Zimmermann Patentanwalts-PartG mbB European Patent Attorneys Viktualienmarkt 8 80331 München (DE)**

(56) Entgegenhaltungen:
EP-A1- 3 241 640     EP-A2- 0 282 046
EP-B1- 3 241 640     DE-A1- 2 304 398
US-A- 2 282 193      US-A- 3 368 263
US-A- 3 623 275

## Beschreibung

Die Erfindung betrifft ein Verfahren der Bearbeitung einer Verzahnung eines metallischen Werkstücks, insbesondere im kontinuierlichen Wälzschleifen, bei dem eine gegenüber ihrer vorgegebenen Endgeometrie noch ein Aufmaß aufweisende Zahnflanke der Verzahnung zur Erzeugung einer in der Endgeometrie bestehenden spiegelnden Eigenschaft ihrer Oberfläche in einem oder mehreren Bearbeitungsdurchgängen im Bearbeitungseingriff mit einem oder mehreren dazu zugestellten Bearbeitungswerkzeugen mit aus in einer Bindungsmatrix eingelagerten Schneidkörnern geometrisch unbestimmter Schneide hart-feinbearbeitet wird, eine Verwendung eines dazu ausgelegten Verzahnungswerkzeugs für ein derartiges Verfahren sowie eine dazu ausgelegte Verzahnungsmaschine.

Sind Verzahnungen mit einer vorgegebenen Endgeometrie (Zielmaß) zu erzeugen, belässt man bei der beispielsweise spanenden Verzahnungserzeugung im Weichbearbeitungsverfahren noch ein Aufmaß gegenüber der Endgeometrie, das dann nach dem Härten der Verzahnung im Wege der Hart-/Feinbearbeitung abzutragen ist. Die Hart-/Feinbearbeitung wiederum kann wieder spanend mit geometrisch bestimmter Schneide erfolgen (z.B. durch Hartschälen), oder mit geometrisch unbestimmter Schneide durch Schleifprozesse wie etwa das Profilschleifen, Wälzschleifen oder Schabschleifen (Verzahnungs-Honen).

Für typische Anwendungsfälle, etwa für Getrieberäder in der Automobilindustrie kann das noch abzutragende Aufmaß größenordnungsmäßig 0,1 mm, also etwa 100 $\mu$m betragen, und dessen Abtrag erfolgt in der bekannten Technik in mehreren Bearbeitungsdurchgängen jeweils tiefergehender Zustellung über einen oder mehrere Schruppdurchgänge, in denen der überwiegende Anteil des Aufmaßes abgetragen wird, und anschließend einem oder mehreren Schlichtdurchgängen, in dem/denen das nach dem Schruppen noch verbleibende Restaufmaß auf die Endgeometrie abgetragen wird. Beispielsweise kann für das obige Beispiel eines Aufmaßes von 100 $\mu$m in einem Schruppdurchgang 90 $\mu$m Aufmaß abgenommen werden, und die verbleibenden 10 $\mu$m werden in einem Schlichtdurchgang abgetragen.

Für das Schruppen wie auch für das Schlichten werden üblicherweise für die hierzu gewünschte Steifheit des herangezogenen Bearbeitungswerkzeugs, beispielsweise einer Schleifschnecke zum Wälzschleifen, eine keramische Bindung herangezogen, hinsichtlich des Schleifmittels greift man nicht zuletzt aus Kostengründen gerne auf Schleifkörner aus Korund oder gesintertem Korund zurück.

Zudem können über das Schleifen noch Zahnflankenmodifikationen wie Balligkeiten oder Schränkungen eingebracht werden. Es können abrichtbare wie auch nicht abrichtbare Schleifwerkzeuge zum Einsatz kommen. All dies ist dem Fachmann bekannt und beispielsweise in Thomas Bausch, Innovative Zahnradfertigung, 3. Auflage, Expert-Verlag, beschrieben.

Mit der vorstehend erläuterten Kombination aus Schrupp- und Schlichtdurchgängen lassen sich Oberflächen der Verzahnung mit einer Rautiefe $R_z$ im Bereich von etwa bis zu 2,5 $\mu$m erzeugen (bei arithmetischen Mittenrauheitswerten $R_a$ im Bereich von etwa 0,3 bis 0,6 $\mu$m). Die Oberfläche nach einer solchen Bearbeitung und mit diesen Rauheitswerten erscheint matt. Anwenderseitig werden jedoch vermehrt Ansprüche nach höheren Oberflächenqualitäten im Sinne geringerer Oberflächenrauheiten gestellt, die so weit reichen, dass die Oberfläche spiegelnd erscheint.

Zum Erreichen dieser weiteren Anforderungen werden die durch Schruppen und Schlichten bereits vorbereiteten Verzahnungen einer Polierbearbeitung unterzogen, die die Verzahnungsoberfläche im Wesentlichen lediglich noch auf geringere Rauheitswerte poliert. Eine derartige Verfahrensgestaltung wurde beispielsweise von der Firma Reishauer auf dem WZL-Feinbearbeitungsseminar 2015 als Polierschleifen unter Verwendung einer elastischen Bindung in einem Schleifschneckenbereich vorgestellt, das unmittelbar im Anschluss an die herkömmliche Schleifbearbeitung ohne Unterbrechung des Bearbeitungsprozesses durchgeführt wird und lediglich die Aufgabe hat, die Spitzenhöhe des Rauheitsprofiles zu reduzieren, ohne die Flankentopografie der Verzahnungsflanken im aktiven Bereich zu verändern. Für dieses Polierschleifen wird ein Rauheitsprofil nach DIN4768 mit $R_z$ von 0,73 $\mu$m und $R_a$ von 0,08 $\mu$m als erreichbar angegeben.

Als weiteres Verfahrensprinzip im Rahmen der gleichen Vorstellung ist eine sogenannte Feinschleifstufe vorgeschlagen worden, für das mit keramischer Bindung Schleifschnecken meist durch Verwendung einer feineren Schleifscheibenkörnung sowohl die Spitzenhöhe als auch die Riefentiefe des Rauheitsprofiles reduziert werden, ohne die Flankentopografie der Verzahnungsflanken im aktiven Bereich zu verändern. Dieses Feinschleifen kann in der Schlichtbearbeitungsstufe oder in einer zusätzlichen Bearbeitungsstufe unmittelbar im Anschluss an die herkömmliche Schleifbearbeitung ausgeführt werden, ohne den Bearbeitungsprozess zu unterbrechen, erreicht jedoch nur ein Rauheitsprofil von $R_z$ von 1,35 $\mu$m und $R_a$ von 0,21 $\mu$m und damit noch nicht die Rauheits-Kennwerte einer anwendervorgegebenen Zielvorstellung von $R_z$ kleiner 1 $\mu$m und $R_a$ kleiner 0,1 $\mu$m. Durch die obige Möglichkeit des von Reishauer vorgeschlagenen Polierschleifens wird mit vergleichsweise geringem Aufwand eine signifikante Verbesserung der Funktionseigenschaften der Verzahnung erreicht. Auch ist an vorgestellten beispielhaften Werkstücken die spiegelnde Verzahnungsoberfläche nach dem Polieren gut erkennbar. Sowohl für das Polier- als auch für das Feinschleifen wird angegeben, dass die Änderung der Oberflächenfeingestalt zeitadditiv erfolgt.

EP 3 241 640 A1 offenbart ein Verzahnungsschleifen einschließlich eines Feinschleif- oder Polierschleifdurchgangs mit einem schneckenförmigen Schleifwerkzeug mit zwei unterschiedlichen Bereichen jedoch gleichen Profils, wobei mit diesen beiden Bereichen mit jeweils unterschiedlichen Schwenkwinkeln gearbeitet wird.

Der Erfindung liegt die Aufgabe zugrunde, ein Verfahren der eingangs genannten Art hinsichtlich eines zufriedenstellenden Kompromisses aus Verzahnungsoberflächen-Qualität und Verfahrensführung weiterzubilden.

Diese Aufgabe wird von der Erfindung durch ein Verfahren mit den Merkmalen von Anspruch 1 gelöst. Hierzu ist vorgesehen, dass (bei einer durch ein als Referenz bezogenes negatives Aufmaß über die Endgeometrie entsprechenden radialen Über-Zustellung von wenigstens 20 $\mu$m und höchstens 100 $\mu$m bewirkte Druckvorspannung)

in einem Bearbeitungsdurchgang eines Bearbeitungswerkzeugs sowohl durch eine über seine Bindungsmatrix eingestellte elastisch nachgiebige Lagerung der Schneidkörner auf diese Oberflächeneigenschaft hingewirkt als auch eine durch eine über die Zustellung des Bearbeitungswerkzeugs eingestellte Druckvorspannung, welcher der Bearbeitungseingriff unterworfen wird schneidende Aufmaßverringerung um wenigstens 2 $\mu$m an der Zahnflanke bewirkt wird.

Dabei beruht die Erfindung auf der Erkenntnis, dass ein Erreichen zufriedenstellender Oberflächeneigenschaften einerseits und Vorteilen für die Bearbeitung selbst andererseits erreichbar sind, indem trotz der zu erreichenden Oberflächeneigenschaften und der dazu über die Bindematrix eingestellte elastisch nachgiebige Lagerung der Schneidkörner noch eine schneidende Aufmaßverringerung an der Zahnflanke erreichbar ist, indem über die Zustellung des Bearbeitungswerkzeugs eine Druckvorspannung eingestellt wird. Dies erlaubt es für diverse Anwendungsfälle, diesen Bearbeitungsdurchgang bereits unmittelbar nach (auch nach nur) einem Schruppdurchgang auszuführen, so dass insbesondere ein Verfahrensdurchgang des Schlichtens entfallen kann, und demnach kürzere Zykluszeiten erreichbar sind, wie weiter unten noch weitergehend erläutert wird.

Im Sinne dieser Offenbarung ist eine spiegelnde Eigenschaft der Oberfläche bei einer gemittelten Rautiefe $R_Z$ von 1,35 $\mu$m oder geringer gegeben. Bei der erfindungsge-mäßen schneidenden Aufmaßverringerung um wenigstens 2 $\mu$m wird die Grenze zwischen Kernbereich und Profilriefenbereich gemäß ISO13565 des Rauheitsprofils der von dem Bearbeitungswerkzeug mit elastisch nachgiebiger Lagerung der Schneidkörner bearbeiteten Zahnflankenoberfläche beim Abtrag überschritten. Es werden somit nicht nur die Spitzen des Profils gebrochen, sondern im Wesentlichen das bisherige Rauheitsprofil vor dei schneidenden Aufmaßverringerung beseitigt und durch ein neues erzeugtes Rauheitsprofil ersetzt, welches nach der Bearbeitung mit diesem Bearbeitungswerkzeug die spiegelnde Eigenschaft aufweist. In einer weiteren bevorzugten Ausgestaltung wird bei der schneidenden Aufmaßverringerung noch über mehr als ein Drittel des Profilriefenbereichs hinweg abgetragen, weiter bevorzugt über mehr als zwei Drittel dieses Bereichs. Es wird durchaus auch vorgesehen, dass der Profilriefenbereich nahezu vollständig oder sogar vollständig abgetragen wird.

In diesem Zusammenhang sind in einer besonders bevorzugten Verfahrensgestaltung in diesem Bearbeitungsdurchgang mehr als 3 $\mu$m, bevorzugt mehr als 4 $\mu$m, insbesondere mehr als 5 $\mu$m Aufmaß abgetragen, und/oder weniger als 12 $\mu$m, bevorzugt weniger als 10 $\mu$m, insbesondere weniger als 8 $\mu$m. Dies erlaubt zum einen eine geringere Sensibilität für die vorherige Durchführung einer insbesondere Schruppbearbeitung. Andererseits werden durch nicht zu hohen Aufmaßabtrag schädliche Einflüsse durch zu hohe Druckvorspannungen vermieden.

Die Druckvorspannung wird erreicht, indem die Maschinenachseinstellung für eine beispielsweise radiale Zustellung des Werkzeugs zum Werkstück höher eingestellt wird als eine Vergleichseinstellung, die man im Falle eines unnachgiebigeren Werkzeugs zum Erreichen des gewünschten Aufmaßabtrags heranziehen würde (Einstellung auf negatives Aufmaß). Beispielsweise lässt sich für die Referenz, auf die sich die nachfolgenden Werte beziehen, die Schleifschnecke heranziehen, mit der ein vorangehender Aufmaßabtrag vor dem Bearbeitungsdurchgang des Bearbeitungswerkzeugs mit der elastisch nachgiebigen Lagerung der Schneidkörner durchgeführt wird. Bevorzugt wird umgerechnet auf die derartige referenzbezogen radiale Über-Zustellung einer Maschinenachse eine solche Über-Zustellung von wenigstens 28 $\mu$m, insbesondere wenigstens 36 $\mu$m eingestellt, und/oder von höchstens 90 $\mu$m, insbesondere höchstens 80 $\mu$m, insbesondere weiter bevorzugt höchstens 70 $\mu$m. Absolute Zahlenwerte der radialen Über-Zustellung können von Bearbeitungsmaschine zu Bearbeitungsmaschine variieren, da deren elastische Nachgiebigkeit mit zu berücksichtigen ist. Diese sind vor erstmaligem Einsatz bei gegebener Maschinenkonfiguration und Werkstückkonfiguration für das herangezogene Bearbeitungswerkzeug mit der elastisch nachgiebigen Lagerung der Schneidkörner erstmalig zu bestimmen oder entsprechend abzurufen aus Datensätzen, in denen diese Werte über experimentelle Testungen oder präzise numerische Simulationen abgelegt sind.

Hinsichtlich der Schneidkörner bzw. Schleifkörner wird eine Knoop-Härte (in N/mm$^2$) von mehr als 23.000, bevorzugt mehr als 25.000, insbesondere mehr als 27.000 bevorzugt. Dies sorgt für eine gute Schneidleistung. Bei Bruch einzelner Schneidkörner entstehen zudem wieder "frische" Schneidkanten, so dass insgesamt eine zufriedenstellende Dauerhaftigkeit der Werkzeuge erreicht wird und insbesondere die bis zum nächsten erforderlichen Abrichten geleistete Schneidarbeit zufriedenstellend ist.

Hinsichtlich der Schneidkörner bzw. Schleifkörner wird Siliziumcarbid (SiC), insbesondere grün oder schwarz, als Bestandteil, insbesondere überwiegender Bestandteil bevorzugt. Es wird auch an Kornmischungen mit bevorzugt wenigstens 30%, weiter bevorzugt wenigstens 50%, insbesondere wenigstens 70% SiC gedacht, insbesondere mit Korund/Sinterkorund als weiterem Mischungsbestandteil.

Bevorzugte Korngrößen für das herangezogene Schleifkorn liegen im Bereich von größer 5,5 $\mu$m, insbesondere größer 7,5 $\mu$m, weiter bevorzugt größer 8,5 $\mu$m, andererseits ist jedoch bevorzugt vorgesehen, dass diese geringer ist als 18 $\mu$m, bevorzugt als 16 $\mu$m, insbesondere als 14 $\mu$m. Nach den Bestimmungen der FEPA (Federation of European Producers of Abrasives) entsprechen beispielsweise eine Schleifkorngröße von 9,4 $\mu$m einer Gewebefeinheit des Siebes von 600 Mesh, eine Schleifkorngröße von 6,5 $\mu$m einem Mesh von 800.

Materialtechnisch ist bevorzugt vorgesehen, dass die elastische Einstellung eine Materialauswahl für die Bindungsmatrix als ein Kunststoffmaterial oder ein Gummimaterial beinhaltet, insbesondere Polyurethan.

Die Elastizität des Bearbeitungswerkzeugs mit der elastisch nachgiebigen Lagerung der Schneidkörner bewegt sich somit in einem Bereich, in dem einerseits ein Walk-Effekt noch möglich ist, zum anderen noch die erfindungsgemäße schneidende Mindestaufmaßverringerung erfolgt. In diesem Zusammenhang ist besonders bevorzugt vorgesehen, dass das in GPa gemessene Elastizitätsmodul (E-Modul) des Bearbeitungswerkzeugs kleiner ist als 20,0, bevorzugt kleiner als 18,5, insbesondere kleiner als 17,0 und/oder größer ist als 10,0, bevorzugt größer als 11,5, insbesondere größer als 13,0. Das E-Modul kann im Rahmen einer Schallmessung bestimmt werden, wie sie ohnehin für Verzahnungswerkzeuge in der Qualitätsüberprüfung eingesetzt wird, z. B. mit Messsystemen von GrindoSonic®. Dazu wird das beispielsweise über eine Drei- oder Vierpunktlagerung gelagerte Werkzeug über einen Erreger in Schwingung versetzt und das E-Modul bei bekannter Dichte des Werkzeugs über einen die Frequenzantwort des Werkzeugs auf die Erregung erfassten Sensors bestimmt (bei Werkzeugüberprüfungen wird diese Technik angewandt, um im Falle einer Unterdrückung höherer Frequenzen eine Beschädigung des Werkzeugs festzustellen). Die obigen Werte beziehen sich auf das für diesen Bearbeitungsdurchgang herangezogene Werkzeug (und nur darauf). Sollte ein Kombiwerkzeug vorgesehen sein, das in einem Bereich für den Bearbeitungsdurchgang ausgelegt ist, und in einem damit verbundenen Bereich für etwa eine Schruppbearbeitung, und dazu mit einer keramischen Bindung ausgestattet sein, ergeben sich bei Messung des Kombiwerkzeugs dagegen entsprechend höhere Werte des E-Moduls des Gesamtverbundes von in Richtung auf 30 GPa, entsprechend üblichen E-Modulwerten keramisch gebundener Schleifwerkzeuge von etwa 34 GPa. Reine Polierwerkzeuge wie eingangs erläutert haben dagegen entsprechend ihres Einsatzzweckes E-Module von nur etwa 10 GPa bis sogar unter 5 GPa.

Es ist somit vorgesehen, dass mit weicheren Werkzeugen gearbeitet wird als die üblicherweise zum Schruppen und Schlichten herangezogenen Keramikbindungen, andererseits jedoch mit härteren Werkzeugen als rein für Polieraufgaben vorgesehenen Werkzeugen.

Hinsichtlich des Oberflächenrauheitsgrades der gemittelten Rautiefe ($R_z$) ist nach diesem Bearbeitungsdurchgang ein in $\mu$m bemessener Wert von geringer als 1,2, bevorzugt geringer als 1,1, weiter bevorzugt geringer als 1,0 und insbesondere geringer als 0,9 erreichbar und vorgesehen, für den arithmetischen Mittenrauwert $R_a$ Werte von geringer als 0,12, insbesondere geringer als 0,10. Es konnten sogar (siehe unten) Werte von geringer als 0,08 erreicht werden. Bevorzugt ist des Weiteren, dass die Summe aus (über die Abbott-Kurve) bestimmbare Summe aus Kernrautiefe $R_k$ und reduzierter Spitzenhöhe $R_{pk}$ geringer ist als 0,6 $\mu$m, sogar als 0,5 $\mu$m oder gar als 0,4 $\mu$m. Für die reduzierte Riefentiefe $R_{vk}$ sind Werte nicht größer als die Größenordnung dieser Summe bevorzugt, $R_{vk}$-Werte die 50% der Kernrautiefe $R_k$ ausmachen oder an diesen herankommen oder sogar überschreiten, sind jedoch durchaus vorgesehen.

Bevorzugt ist vorgesehen, dass die in m/s bemessene Schnittgeschwindigkeit ($v_c$) dieses Bearbeitungsdurchgangs größer ist als 42, bevorzugt als 45, insbesondere als 48, und/oder geringer ist als 80, bevorzugt geringer als 72, insbesondere als 66.

Wie oben bereits angesprochen, ist in einer besonders bevorzugten Verfahrensgestaltung vorgesehen, dass der bislang diskutierte Bearbeitungsdurchgang ein nachfolgender Bearbeitungsdurchgang ist, dem eine das Aufmaß um insgesamt mehr als 30 $\mu$m, bevorzugt mehr als 50 $\mu$m, insbesondere mehr als 70 $\mu$m verringernde Bearbeitung, insbesondere Schruppbearbeitung vorausgeht. In diesem Zusammenhang ist bevorzugt auch vorgesehen, dass die vorausgehende Bearbeitung höchstens zwei Bearbeitungsdurchgänge, insbesondere nur einen Bearbeitungsdurchgang umfasst. In letzterer der bevorzugt vorgesehenen Varianten reichen somit zwei Bearbeitungsdurchgänge aus, ein Schruppbearbeitungsdurchgang, der in diesem Fall das Gesamtaufmaß von bevorzugt mehr als 50 $\mu$m oder mehr bis auf das dem Bearbeitungsdurchgang der elastischen Lagerung und Druckvorspannung belassene Aufmaß abträgt. Es ergeben sich dann erhebliche Zykluszeiteinsparungen durch völliges Auslassen des üblichen Schlichtbearbeitungsdurchgangs.

Die Variante mit zwei (Schrupp-)Bearbeitungsdurchgängen wird bevorzugt dann zur Anwendung gebracht, wenn das gesamt abzutragende Aufmaß mehr als 80 $\mu$m, mehr als 90 $\mu$m oder sogar mehr als 100 $\mu$m beträgt und/oder starke Asymmetrien in den gehärteten Vorverzahnungen vorliegen. In diesem Fall wird grundsätzlich eine wenigstens annähernd gleiche Abtragslast für beide Schruppdurchgänge bevorzugt vorgesehen, jedenfalls soll jeder der Bearbeitungsdurchgänge bevorzugt mehr als 30 μm, insbesondere mehr als 40 μm Aufmaß abtragen. Auch hier kann durch Auslassen des Schlichtschritts Zykluszeit eingespart werden, der üblicherweise langsamer gefahren wird.

Insbesondere bei niedriger Qualität der der Hartfeinbearbeitung übergebenen Vorverzahnung , etwa einem Rundlauffehler und/oder einem Summenteilungsfehler von (jeweilig) mehr als 60% oder sogar als 65%, insbesondere sogar als 70% des Gesamtaufmaßes q, kann jedoch durchaus auch vorgesehen werden, im Falle einer Durchführung von zwei Bearbeitungsdurchgängen vor dem Bearbeitungsdurchgang mit dem Bearbeitungswerkzeug der elastisch nachgiebigen Lagerung der Schneidkörner eine Verteilung des Abtrags zwischen dem ersten und dem zweiten dieser vorgelagerten Durchgänge asymmetrischer zu gestalten, mit geringerem Abtrag im zweiten der vorangehenden Bearbeitungsdurchgänge. In einer möglichen Ausgestaltung könnte beispielsweise für eine nach der Behandlung mit dem Bearbeitungswerkzeug elastisch nachgiebiger Lagerung der Schneidkörner erhaltene (zu erhaltende) gemittelte Rautiefe $R_Z$ der Oberfläche ein Asymmetrie-Faktor $\Delta q/q$ (mit $\Delta q=|q_1-q_2|$ und $q=|q_1+q_2|$) und $q_1$, $q_2$ Abtrag im ersten bzw. zweiten Durchgang gleich oder geringer als g2 angenommen werden, wobei

$$g2 = 0{,}6 - [2/(5\pi)] \arctan [k (R_Z[\mu m] - R_0)],$$

mit k=80, $R_0$=1,2, bevorzugt $R_0$=1,15, weiter bevorzugt $R_0$=1,1, nochmals weiter bevorzugt $R_0$=1,05, insbesondere $R_0$=1,0. Alternativ oder zusätzlich wird es bevorzugt, dass das Verhältnis $\Delta q/q \geq g1$ ist, mit

$$g1 = \beta [1 - H (R_Z[\mu m] - R'_0)]$$

mit $R'_0$=1,0, bevorzugt 1,05, insbesondere 1,1 und $\beta$=0,4, bevorzugt 0,5, insbesondere 0,6, sowie der Heaviside Funktion $H(x)$.

Für typische Anwendungsfälle von wälzgeschliffenen Verzahnungen im Modulbereich von geringer als 6 und Verzahnungsbreiten bis 150 mm können somit in der bevorzugten Variante von nur insgesamt zwei Bearbeitungsdurchgängen entsprechend geringe Bearbeitungszeiten erreicht werden, in der Verfahrensgestaltung mit zwei Durchgängen und dem Bearbeitungsdurchgang der elastisch nachgiebigen Lagerung immer zufriedenstellende Bearbeitungszeiten zum Erreichen der gewünschten Oberflächeneigenschaften in der Endgeometrie erreicht werden, die immer noch jedenfalls nicht höher sind als bei herkömmlichen Verfahren.

Bevorzugt wird in diesem Zusammenhang ein Verhältnis von Vorschubgeschwindigkeit des nachfolgenden Bearbeitungsdurchgangs zur Vorschubgeschwindigkeit des vorangehenden Durchgangs von mehr als 1,4, bevorzugt mehr als 2, insbesondere mehr als 2,5, sogar mehr als 3 eingestellt. Sogar ein Verhältnis von 4 oder höher ist denkbar. Für das Konditionieren des Schleifwerkzeugs stehen die üblichen Abrichtsysteme aus Form- und Profilrollen zur Verfügung. Zu nennen sind auch flexible, werkzeugspezifische oder auch mehrrippige Abrichtwerkzeuge. Auch verzahnte oder Radienabrichter können zum Einsatz kommen. Dabei kann die Auslegung des Konditionierens analog zu einem üblichen Schleifprozess aus einer Kombination von Schrupp- und Schlichthüben erfolgen

Des Weiteren betrifft die Erfindung die Verwendung eines Verzahnungswerkzeugs gemäß Anspruch 12.

Zudem wird von der Erfindung eine Werkzeugmaschine zur Bearbeitung einer Verzahnung eines metallischen Werkstücks unter Schutz gestellt, die mit einer Steuereinrichtung zur Ausführung des erfindungsgemäßen Verfahrens ausgestaltet ist.

Weitere Merkmale, Einzelheiten und Vorteile der Erfindung ergeben sich aus der nachfolgenden Beschreibung mit Bezug auf die beigefügten Figuren, von denen

Fig. 1 schematisch eine Wälzschleifmaschine zeigt,
Fig. 2 schematisch einen Axialschnitt durch ein schneckenförmiges Werkzeug zeigt, und
Fig. 3a, b Abbott-Kurven zu zwei bearbeiteten Verzahnungen zeigt.

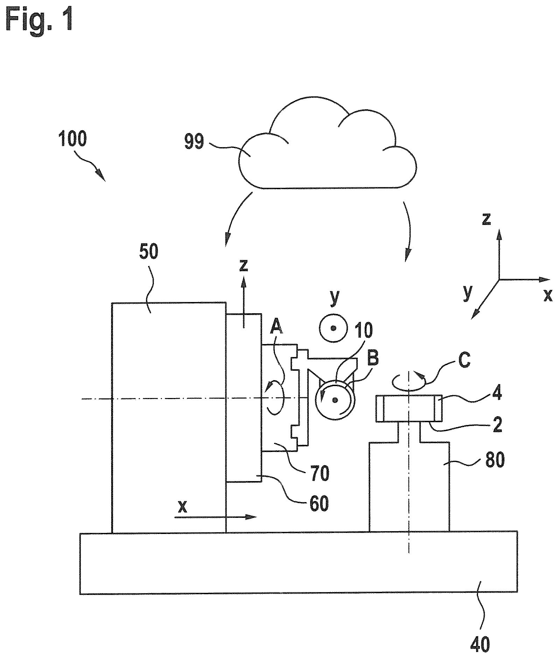

Ein Ausführungsbeispiel der Erfindung wird nachstehend für das kontinuierliche Wälzschleifen weitergehend erläutert. Eine hierzu heranziehbare Wälzschleifmaschine weist werkstückseitig eine in einem Maschinenbett 40 gelagerte Werkstückspindel oder Tischspindel 80 auf, auf der ein Werkrad 2 aufgespannt ist, das bereits vorverzahnt ist und eine Verzahnung 4 aufweist. Die Art des Werkrads 2 und der Verzahnung 4 ist nicht weitergehend eingeschränkt, dargestellt ist ein zylindrisches Rad, die Erfindung ist jedoch nicht darauf eingeschränkt und könnte auch andere Arten von Verzahnungen bearbeiten. Im Falle von wellenförmigen Werkstücken kann dazu ein in Fig. 1 nicht dargestellter Reitstock vorgesehen werden.

Werkzeugseitig ist eine Schlittenanordnung vorgesehen, die das Bearbeitungswerkzeug 10 in Form einer Schleifschnecke hält und positionieren kann. Konkret könnten wie in Fig. 1 drei lineare Bewegungsachsen X, Y und Z vorgesehen sein, die die Relativlage des Werkzeugs 10 gegenüber dem Werkrad 2 über von einer Steuerung 99 CNC-gesteuerte Maschinenachsbewegungen einstellen kann.

Für eine radiale (X) Zustellbewegung ist ein Linearschlitten 50 vorgesehen. Dieser trägt einen Vertikalschlitten 60, für eine parallel zur Werkstückdrehachse C verlaufende Maschinenachse Z. Drehbar zu dem Vertikalschlitten 60 angeordnet ist ein weiterer Träger 70, die Verschwenkung erfolgt dabei und die X-Achsenrichtung (Schwenkachse A). Der Träger 70 beinhaltet auch einen Tangentialschlitten (Y-Achse), mit dem das Werkzeug 10 entlang der Werkzeugdrehachse verschoben werden kann. In der in Fig. 1 dargestellten Situation mit Schwenkwinkel A=0 verläuft die Werkzeugdrehachse in Y-Richtung des in Fig. 1 dargestellten rechtwinkligen Koordinatensystems X, Y, Z. Die Drehachse des Werkzeugs um die eigene Achse wird als Drehachse mit B bezeichnet, die Werkstückdrehachse als Drehachse mit C bezeichnet.

Soweit beschrieben, kann es sich konstruktionstechnisch somit um einen bekannten Aufbau einer Wälzschleifmaschine handeln, und entsprechend können alternativ auch andere konstruktive Gestaltungen und Maschinenachsverteilungen vorgesehen werden.

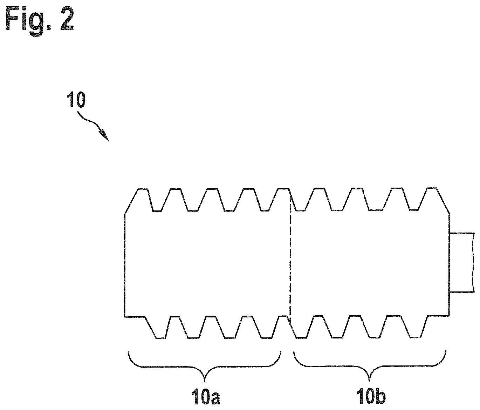

Bei dem in Fig. 2 schematisch dargestellten schneckenförmigen Werkzeug 10 handelt es sich um ein Kombiwerkzeug mit zwei in diesem Ausführungsbeispiel miteinander drehfest verbundenen koaxialen Abschnitten 10a und 10b. Der Abschnitt 10a ist in diesem Ausführungsbeispiel ein für das Schruppen von Verzahnungen im kontinuierlichen Wälzschleifverfahren ausgelegte Schleifschnecke, insbesondere mit keramischer Bindung, wie ebenfalls aus dem Stand der Technik gut bekannt. Bei dem anderen Abschnitt 10b handelt es sich in diesem Ausführungsbeispiel ebenfalls um ein schneckenförmiges Werkzeug, das insbesondere hinsichtlich der Schneckenparameter dem Abschnitt 10a gleichgestaltet sein kann und hier ist. Die Breite von 10b entspricht Minimum der Eingriffsbreite zwischen Werkzeug 10 und Zahnrad 4, maximal der halben Schleifscheibenbreite (10a = 10b), häufig im Bereich von 60 mm.

In diesem Ausführungsbeispiel beträgt der E-Modul des Abschnitts 10b, wenn alleine gemessen, 13,6 GPa. Zudem ist im vorliegenden Ausführungsbeispiel die Bindungsmatrix aus einem Polyurethanwerkstoff gebildet, und die Schleifkörner aus grünem Siliziumcarbid. Wie nachfolgend genauer erläutert wird, dient der Abschnitt 10b der Schnecke 10 dazu, eine geschruppte Verzahnung 4 ohne einen zwischengeschalteten Schlichtdurchgang (welcher üblicherweise, etwa mit Abschnitt 10a der Schnecke 10 durchgeführt wird) materialabtragend auf Endgeometrie mit bereits den angestrebten Oberflächeneigenschaften zu bringen.

Hierzu wird zunächst in einem oder mehreren Schruppdurchgängen das Aufmaß gegenüber der Endgeometrie bis auf in diesem Ausführungsbeispiel ein Restaufmaß von beispielsweise 6 $\mu$m abgetragen. Dieses Restaufmaß ist somit durchaus geringer als üblicherweise beim Schruppen für einen nachfolgenden Schlichtdurchgang belassen (typischerweise übernimmt der Schlichtvorgang einen Materialabtrag von etwa 20 $\mu$m). Anschließend kommt ohne Durchführung eines Schlichtdurchgangs der Schneckenabschnitt 10b zum Einsatz, um in diesem Ausführungsbeispiel in nur einem Bearbeitungsdurchgang das verbleibende Restaufmaß auf Endgeometrie abzutragen. Durch höhere radiale (X) Zustellung als zum Erreichen der Endgeometrie mittels eines nicht nachgiebigen Werkzeugs wie etwa dem Abschnitt 10a erforderlich, wird der Schneckenabschnitt 10b in Bearbeitungseingriff des kontinuierlichen Wälzschleifens mit der Verzahnung 4 gebracht. Aufgrund der Kombination des derart nachgiebig gestalteten Schneckenabschnitts 10b mit der auf negatives Aufmaß eingestellten Vorspannung wird aufgrund der Nachgiebigkeit des Werkzeugabschnitts 10b dennoch nur bis auf Endgeometrie Material abgetragen, bei gleichzeitig hoher Oberflächenqualität. Zudem wird aufgrund der vergleichsweise gegenüber reinem Polieren immer noch härterem Bearbeitungswerkzeug deutlich mehr Materialabtrag bewirkt als herkömmliches Polieren leistet.

Nachfolgend werden noch zwei konkrete Ausführungsbeispiele beschrieben.

In einem ersten Ausführungsbeispiel wird ein Zahnrad mit Modul 3 mm, 22 Zähnen und einem Eingriffswinkel von 20°, das mit einem Schrägungswinkel von 20° schrägverzahnt ist, geschliffen. Die Verzahnungsbreite bei diesem Ausführungsbeispiel beträgt 34 mm. Außendurchmesser und Fußkreisdurchmesser des Ausführungsbeispiels liegen bei 76,77 mm bzw. 62,50 mm. Das Vorbearbeitungsmaß vor der HartFeinbearbeitung als diametrales Zweikugelmaß bei einem Messkugeldurchmesser von 6 mm beträgt 81,150 mm, das der Endgeometrie entsprechende Fertigmaß 80,605 mm, womit sich ein Aufmaß pro Flanke von 125 $\mu$m ergibt.

Bei dem Schleifwerkzeug handelt es sich um ein zweikomponentiges Werkzeug wie in Fig. 2 dargestellt, einer in diesem Ausführungsbeispiel dreigängigen Schleifschnecke mit Eingriffswinkel von 20°.

Die Schnittgeschwindigkeit wurde auf 50 m/s eingestellt, die Bearbeitungsstrategie ist eine mit drei Schleifhüben, von denen zwei Schruppschleifhübe mit Schneckenbereich 10a und ein abschließender Durchgang mit Schneckenbereich 10b herangezogen wurde.

In diesem konkreten Ausführungsbeispiel betrug die radiale Zustellung zunächst 0,237 mm, im ersten Schruppdurchgang, dann 0,179 mm im zweiten Schruppdurchgang. Die maschinenseitig eingestellte radiale Zustellung im dritten Bearbeitungsdurchgang noch 0,070 mm. Das nominelle Zeitspannungsvolumen $Q_w$ in [mm³/s] betrug in der Reihenfolge der Hübe 65,5; 43,7 und 43,4, bei einem Vorschub von ebenfalls in dieser Reihenfolge 0,273; 0,241 und schließlich 0,846 mm pro Werkstückumdrehung. Relativ gesehen ist der Vorschub somit im letzten Bearbeitungsdurchgang deutlich höher als in den vorangegangenen Schruppdurchgängen. Dies erlaubt somit insgesamt geringe Bearbeitungszeiten und entsprechend deutlich bessere Taktzeiten als herkömmliche Verfahren, bei denen nach dem Schruppen zunächst noch ein Schlichtdurchgang zwischengeschaltet ist.

Messungen der Oberflächengüte der so bearbeiteten Verzahnung 4 erfolgten mit einem Hommel-Etamic Turbowave V7.60 (Taster TKU 300, Messbereich 400 $\mu$m, Taststrecke $L_t$ 4,80 mm, Geschwindigkeit ($V_t$) 0,5 mm/s unter Aufnahme von 24.000 Messwerten bei einem Filter P-R-W-Profil nach ISO 11562 mit $L_c$ (cut off) von 0,800 mm mit $L_c/L_s$:AUS Taster:r=5 $\mu$m/90°).

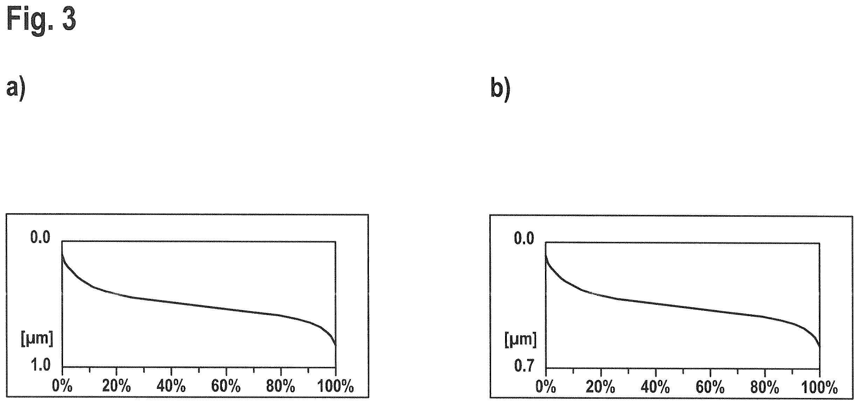

Für den Materialanteil R-Profil (Abbott-Kurve) wurde die in Fig. 3a (rechte Flanke) dargestellte Kurve ermittelt, Oberflächenkennwerte waren $R_a$=0,09 $\mu$m, $R_z$=0,71 $\mu$m.

In einem zweiten Ausführungsbeispiel wurde mit einer Zweihub-Strategie gearbeitet, je einem Hub mit Schneckenabschnitt 10a und 10b. Die Verzahnungsdaten hierbei waren Modul 1,275 mm bei 36 Zähnen, Eingriffswinkel 18°, Schrägungswinkel -22° bei einer Verzahnungsbreite von 16,6 mm, Außendurchmesser 51,98 mm und Fußkreisdurchmesser 45,40 mm.

Hier wurde ein Vorbearbeitungsmaß (im diametralen Zweikugelmaß $M_{dk}$ mit Messkugeldurchmesser 2,5 mm) von 53,803 mm auf ein Fertigmaß von 53,275 mm abgetragen (entspricht einem Aufmaß pro Flanke von 0,099 mm). Als Werkzeug diente hier eine fünfgängige Schleifschnecke mit Eingriffswinkel von 18°, die Schnittgeschwindigkeit war gegenüber dem ersten Ausführungsbeispiel unverändert.

Als weitere Prozessparameter in den Hüben 1 bzw. 2 wurde eine Maschinenachseinstellung für die Radialzustellung von 0,306 mm bzw. 0,065 mm eingestellt, der Vorschub pro Werkstückumdrehung betrug 0,227 bzw. 0,948 mm bei einem nominellen Zeitspanungsvolumen von 45 bzw. 40 mm³/s.

Auch die so bearbeitete Verzahnung wurde gemessen, mit geänderten Messparametern hinsichtlich Taststrecke von 1,50 mm und Geschwindigkeit von 0,15 mm/s und $L_c$ 0,250 mm.

Für $R_a$ wurde auf diese Weise ein Wert von 0,07 $\mu$m, für $R_z$ ein Wert von 0,51 $\mu$m ermittelt, die Abbott-Kurve wiederum für die rechte Flanke ist in Fig. 3b abgebildet. Zudem wurde hier noch eine Kernrautiefe $R_k$ von 0,22 $\mu$m sowie eine reduzierte Spitzenhöhe $R_{pk}$ von 0,08 $\mu$m und eine reduzierte Riefentiefe $R_{vk}$ von 0,11 $\mu$m bestimmt.

In beiden Ausführungsbeispielen konnten so-mit die anwenderseitig erwünschten Oberflächenqualitä-ten erreicht und sogar übertroffen werden, bei dennoch günstigen Bearbeitungszeiten durch Verzicht auf den üblichen Schlichtdurchgang des Vorbearbeitungswerk-zeugs bevorzugt keramischer Bindung (Schneckenab-schnitt 10a).

Im Übrigen ist die Erfindung nicht auf die in der vorhergehenden Beschreibung explizit dargelegten Ausführungsbeispiele eingeschränkt.

Obgleich die Erfindung in konkreten Ausführungen für das kontinuierliche Wälzschleifen näher beschrieben wurde, sind die einleitend beschriebenen Prozessmechanismen und -merkmale auch auf andere Hart-Feinbearbeitungsverfahren von Verzahnungen anwendbar.

Auch müssen die Werkzeuge für das Schruppen und die Bearbeitung mit nachgiebiger Lagerung und Druckvorspannung nicht über ein Kombiwerkzeug wie in Fig. 2 dargestellt realisiert werden, es könnten auch getrennte Werkzeuge herangezogen werden, die gemeinsam in einen Schleifkopf aufgespannt werden, oder aber auch in getrennten Schleifköpfen vorgesehen sein könnten, genauso wie sich andere Schleifmaschinenkonfigurationen wie die in Fig. 1 dargestellte heranziehen lassen.

**Patentansprüche**

1. Verfahren der Bearbeitung einer Verzahnung (4) eines metallischen Werkstücks (2), insbesondere im kontinuierlichen Wälzschleifen, bei dem eine gegenüber ihrer vorgegebenen Endgeometrie noch ein Aufmaß aufweisende Zahnflanke der Verzahnung (4) zur Erzeugung einer in der Endgeometrie be-stehenden spiegelnden Eigenschaft ihrer Oberflä-che in einem oder mehreren Bearbeitungsdurchgängen im Bearbeitungseingriff mit einem oder mehreren dazu zugestellten Bearbeitungswerkzeugen (10) mit aus in einer Bindungsmatrix eingelagerten Schneidkörnern geometrisch unbestimmter Schneide hart-feinbearbeitet wird,
   **dadurch gekennzeichnet, dass**
   in einem Bearbeitungsdurchgang eines Bearbeitungswerkzeugs (10b) sowohl durch eine über seine Bindungsmatrix eingestellte elastisch nachgiebige Lagerung der Schneidkörner auf diese Oberflächeneigenschaft hingewirkt als auch eine durch eine über die Zustellung des Bearbeitungswerkzeugs eingestellte Druckvorspannung, welcher der Bear-beitungseingriff unterworfen wird, schneidende Auf-maßverringerung um wenigstens 2 $\mu$m an der Zahn-flanke bewirkt wird, wobei die Druckvorspannung durch eine als referenzbezogenes negatives Aufmaß über die Endgeometrie entsprechende radiale Über-Zustellung von wenigstens 20 $\mu$m und höchs-tens 100 $\mu$m bewirkt wird.

2. Verfahren nach Anspruch 1, bei dem in diesem Be-arbeitungsdurchgang mehr als 3 $\mu$m, bevorzugt mehr als 4 $\mu$m, insbesondere mehr als 5 $\mu$m Aufmaß abgetragen wird, und/oder weniger als 12 $\mu$m, be-vorzugt weniger als 10 $\mu$m, insbesondere weniger als 8 $\mu$m Aufmaß abgetragen wird.

3. Verfahren nach Anspruch 1 oder 2, bei dem die elastische Einstellung eine Materialwahl für die Bindungsmatrix als ein Kunststoffmaterial oder ein Gummimaterial beinhaltet, insbesondere Polyurethan.

4. Verfahren nach einem der vorhergehenden Ansprüche, bei dem für das E-Modul des Bearbeitungswerkzeugs ein in GPa bemessener Wert von kleiner 20,0, bevorzugt kleiner 18,5, insbesondere kleiner 17,0 und/oder größer als 10,0, bevorzugt größer als 11,5, insbesondere größer als 13,0 herangezogen wird.

**5.** Verfahren nach einem der vorhergehenden Ansprüche, bei dem die Druckvorspannung durch eine als referenzbezogenes negatives Aufmaß über die Endgeometrie entsprechende radiale Über-Zustellung von wenigstens 28 $\mu$m, insbesondere wenigstens 36 $\mu$m und/oder höchstens 90 $\mu$m, insbesondere höchstens 80 $\mu$m bewirkt wird.

**6.** Verfahren nach einem der vorhergehenden Ansprüche, bei dem die Schneidkörner dieses Bearbeitungsdurchgangs Knoop-Härte in N/mm$^2$ von mehr als 23.000, bevorzugt mehr als 25.000, insbesondere mehr als 27.000 aufweisen.

**7.** Verfahren nach einem der vorhergehenden Ansprüche, bei dem die in m/s bemessene Schnittgeschwindigkeit ($v_c$) dieses Bearbeitungsdurchgangs größer ist als 42, bevorzugt als 45, insbesondere als 48, und/oder geringer ist als 80, bevorzugt geringer als 72, insbesondere als 66.

**8.** Verfahren nach einem der vorhergehenden Ansprüche, bei dem die Korngrößen der Schneidkörner im Bereich von größer 5,5 $\mu$m liegen, insbesondere im Bereich größer 7,5 $\mu$m, weiter bevorzugt im Bereich größer 8,5 $\mu$m und/oder die Korngröße geringer als 18 $\mu$m, bevorzugt als 16 $\mu$m, insbesondere als 14 $\mu$m.

**9.** Verfahren nach einem der vorhergehenden Ansprüche, bei dem eine in $\mu$m angegebene gemittelte Rautiefe ($R_z$) der Oberfläche nach diesem Bearbeitungsdurchgang geringer ist als 1,2, bevorzugt geringer als 1,1, weiter bevorzugt geringer als 1,0 und insbesondere geringer als 0,9 ist.

**10.** Verfahren nach einem der vorhergehenden Ansprüche, bei dem dieser Bearbeitungsdurchgang ein nachfolgender Bearbeitungsdurchgang ist, dem eine das Aufmaß um insgesamt mehr als 30 $\mu$m, bevorzugt mehr als 50 $\mu$m, insbesondere mehr als 70 $\mu$m verringernde Bearbeitung in einem oder mehreren Bearbeitungsdurchgängen unmittelbar vorausgeht.

**11.** Verfahren nach Anspruch 10, bei dem die vorausgehende Bearbeitung höchstens zwei Bearbeitungsdurchgänge, insbesondere nur einen Bearbeitungsdurchgang umfasst.

**12.** Verwendung eines Verzahnungswerkzeugs (10) für eine Hart-/Feinbearbeitung einer Verzahnung (4), das für ein Verfahren nach einem der vorhergehenden Ansprüche ausgelegt ist, in einem Verfahren nach einem der vorhergehenden Ansprüche.

**13.** Verwendung nach Anspruch 12, bei dem das Verzahnungswerkzeug mit einem ersten Bearbeitungsbereich (10b) für die vorangehende Bearbeitung nach Anspruch 10, und einem zweiten Bearbeitungsbereich (10a) für den nachfolgenden Bearbeitungsdurchgang nach Anspruch 10 ausgestattet ist.

**14.** Verwendung nach Anspruch 12 oder 13, bei dem das Verzahnungswerkzeug in Form einer insbesondere für das Wälzschleifen ausgelegten Schnecke (10) gebildet ist.

**15.** Werkzeugmaschine (100) zur Bearbeitung einer Verzahnung eines metallischen Werkstücks, mit einer Steuereinrichtung (99), die die Werkzeugmaschine zur Ausführung eines Verfahrens nach einem der Ansprüche 1 bis 11 steuert, insbesondere unter nach einem der Ansprüche 12 bis 14 erfolgenden Verwendung eines Verzahnungswerkzeugs (10).

**Claims**

**1.** A method for cutting a toothing (4) from a metal workpiece (2), in particular in continuous generating grinding, in which a tooth flank, still having an oversize compared with its predefined final geometry, of the toothing (4) is hard finished, in one or more cutting passes in cutting engagement with in one or more cutting tools (10) fed thereto with a geometrically undefined cutting edge made of cutting grains incorporated in a binder matrix, in order to produce, in the final geometry, a reflective property of the surface of the tooth flank, **characterised in that** in a cutting pass of a cutting tool (10b), both an elastically resilient arrangement of the cutting grains set by its binder matrix acts on the surface property of the tooth flank, and a cutting reduction of the oversize by at least 2 $\mu$m at the tooth flank is realised by a compressive preload, due to the infeed of the cutting tool, to which the cutting engagement is subjected, wherein the compressive preload is effected by an appropriate radial overfeed of at least 20 $\mu$m and no more than 100 $\mu$m as a reference-related, negative oversize compared with the final geometry.

**2.** The method according to claim 1, in which, in said cutting pass, more than 3 $\mu$m, preferably more than 4 $\mu$m, in particular more than 5 $\mu$m oversize is removed, and/or less than 12 $\mu$m, preferably less than 10 $\mu$m, in particular less than 8 $\mu$m oversize is removed.

**3.** The method according to claim 1 or 2, in which the elastically resilient behaviour is based on the material chosen for the binder matrix as a plastic material or a rubber material, in particular polyurethane.

**4.** The method according to one of the preceding claims, in which, for the modulus of elasticity of the cutting tool, a value, measured in GPa, of less than 20.0, preferably less than 18.5, in particular less than 17.0 and/or greater than 10.0, preferably greater than 11.5, in particular greater than 13.0 is used.

5. The method according to one of the preceding claims, in which the compressive preload is effected by means of an appropriate radial overfeed of at least 28 μm, in particular at least 36 μm and/or no more than 90 μm, in particular no more than 80 μm, as a reference-related, negative oversize beyond the final geometry.

6. The method according to one of the preceding claims, in which the cutting grains of said cutting pass have a Knoop hardness in N/mm$^2$ of more than 23,000, preferably more than 25,000, in particular more than 27,000.

7. The method according to one of the preceding claims, in which the cutting speed ($v_c$) measured in m/s of said cutting pass is greater than 42, preferably greater than 45, in particular greater than 48, and/or less than 80, preferably less than 72, in particular less than 66.

8. The method according to one of the preceding claims, in which the grain sizes of the cutting grains are within a range greater than 5.5 μm, in particular within a range greater than 7.5 μm, further preferably within a range greater than 8.5 μm and/or the grain size is less than 18 μm, preferably less than 16 μm, in particular less than 14 μm.

9. The method according to one of the preceding claims, in which an average roughness depth ($R_z$) indicated in μm of the surface after said cutting pass is less than 1.2, preferably less than 1.1, further preferably less than 1.0 and in particular less than 0.9.

10. The method according to one of the preceding claims, in which said cutting pass is a subsequent cutting pass immediately preceded by a cutting operation which reduces the oversize by a total of more than 30 μm, preferably more than 50 μm, in particular more than 70 μm in one or more cutting passes.

11. The method according to claim 10, in which said preceding cutting operation comprises a maximum of two cutting passes, in particular only one cutting pass.

12. A use of a gear-cutting tool (10), designed for a method according to one of the preceding claims, for finishing/hard machining of a toothing (4) in a method according to one of the preceding claims.

13. The use according to claim 12, in which the gear-cutting tool has a first cutting region (10b) for the preceding cutting operation according to claim 10, and a second cutting region (10a) for the subsequent cutting pass according to claim 10.

14. The use according to claim 12 or 13, in which the gear-cutting tool has the form of a worm (10) designed in particular for generating grinding.

15. A machine tool (100) for cutting a toothing made from a metal workpiece, comprising a control device (99) which controls the machine tool for carrying out a method according to one of claims 1 to 11, in particular using a gear-cutting tool in accordance with the use according to any of claims 12 to 14.

**Revendications**

1. Procédé d'usinage d'une denture (4) d'une pièce métallique (2), notamment par rectification continue, dans lequel un flanc de dent de la denture (4), présentant encore une surépaisseur par rapport à sa géométrie finale prédéterminée, est soumis à une finition par usinage sur dur en une ou plusieurs passes, en prise d'usinage avec un ou plusieurs outils d'usinage (10) avançant vers celui-ci et dotés d'une arête de coupe à géométrie indéterminée, constituée de grains de coupe noyés dans une matrice de liaison, afin de produire une propriété réfléchissante de sa surface qui sera présente dans la géométrie finale,
**caractérisé en ce que**
lors d'une passe d'usinage d'un outil d'usinage (10b), ladite propriété de surface est influencée par l'agencement élastiquement flexible des grains de coupe occasionné par la matrice de liaison et il se produit également une réduction, par coupe, de la surépaisseur, d'au moins 2 μm sur le flanc de dent sous l'effet d'une précontrainte de compression occasionnée par l'avance de l'outil d'usinage et à laquelle la prise d'usinage est soumise, ladite précontrainte de compression étant produite par une suravance radiale appropriée d'au moins 20 μm et d'au plus 100 μm correspondant à une surépaisseur négative, eu égard à une référence, par rapport à la géométrie finale.

2. Procédé selon la revendication 1, dans lequel, lors de ladite passe d'usinage, plus de 3 μm, de préférence plus de 4 μm, notamment plus de 5 μm de surépaisseur sont éliminés, et/ou moins de 12 μm, de préférence moins de 10 μm, notamment moins de 8 μm de surépaisseur sont éliminés.

3. Procédé selon la revendication 1 ou 2, dans lequel l'agencement élastique est fonction du matériau choisi pour la matrice de liaison sous forme d'un matériau plastique ou d'un matériau caoutchouteux, notamment du polyuréthane.

4. Procédé selon l'une des revendications précédentes, dans lequel on utilise pour le module d'élasticité de l'outil d'usinage une valeur mesurée en GPa inférieure à 20,0, de préférence inférieure à 18,5, notamment inférieure à 17,0 et/ou supérieure à 10,0, de préférence supérieure à 11,5, notamment supérieure à 13,0.

5. Procédé selon l'une des revendications précédentes, dans lequel la précontrainte de compression est produite par une suravance radiale appropriée d'au moins 28 $\mu$m, notamment d'au moins 36 $\mu$m et/ou d'au plus 90 $\mu$m, notamment d'au plus 80 $\mu$m, correspondant à une surépaisseur négative, eu égard à une référence, par rapport à la géométrie finale.

6. Procédé selon l'une des revendications précédentes, dans lequel les grains de coupe de ladite passe d'usinage présentent une dureté Knoop en N/mm$^2$ qui est supérieure à 23 000, de préférence supérieure à 25 000, notamment supérieure à 27 000.

7. Procédé selon l'une des revendications précédentes, dans lequel la vitesse de coupe ($v_c$) mesurée en m/s de ladite passe d'usinage est supérieure à 42, de préférence à 45, notamment à 48 et/ou inférieure à 80, de préférence inférieure à 72, notamment à 66.

8. Procédé selon l'une des revendications précédentes, dans lequel les granulométries des grains de coupe se situent dans la plage de plus de 5,5 $\mu$m, notamment dans la plage de plus de 7,5 $\mu$m, plus préférablement dans la plage de plus de 8,5 $\mu$m et/ou la granulométrie est inférieure à 18 $\mu$m, de préférence à 16 $\mu$m, notamment à 14 $\mu$m.

9. Procédé selon l'une des revendications précédentes, dans lequel une profondeur de rugosité moyenne ($R_z$) de la surface, indiquée en micromètres, après ladite passe d'usinage est inférieure à 1,2, de préférence inférieure à 1,1, plus préférablement inférieure à 1,0 et notamment inférieure à 0,9.

10. Procédé selon l'une des revendications précédentes, dans lequel ladite passe d'usinage est une passe d'usinage ultérieure, qui est immédiatement précédée d'un usinage en une ou plusieurs passes d'usinage réduisant la surépaisseur d'un total de plus de 30 $\mu$m, de préférence de plus de 50 $\mu$m, notamment de plus de 70 $\mu$m.

11. Procédé selon la revendication 10, dans lequel ledit usinage précédent comprend au plus deux passes d'usinage, notamment une seule passe d'usinage.

12. Utilisation d'un outil à tailler les dentures (10) pour la finition/l'usinage sur dur d'un denture (4), lequel est conçu pour un procédé selon l'une des revendications précédentes, dans un procédé selon l'une des revendications précédentes.

13. Utilisation selon la revendication 12, dans laquelle l'outil à tailler les dentures est doté d'une première zone d'usinage (10b) pour l'usinage précédent selon la revendication 10, et d'une deuxième zone d'usinage (10a) pour la passe d'usinage ultérieure selon la revendication 10.

14. Utilisation selon la revendication 12 ou 13, dans laquelle l'outil à tailler les dentures se présente sous la forme d'une vis sans fin (10) conçue notamment pour la rectification.

15. Machine-outil (100) pour l'usinage d'une denture d'une pièce métallique, comprenant un dispositif de commande (99) qui commande la machine-outil pour la mise en œuvre d'un procédé selon l'une des revendications 1 à 11, en utilisant notamment un outil à tailler les dentures selon l'une des revendications 12 à 14.

# Fig. 1

Fig. 2

10

10a    10b

Fig. 3

a)

b)

**EP 4 228 844 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3241640 A1